(19) Europäisches Patentamt
European Patent Office
Office européen des brevets

(11)  EP 1 330 603 B1

(12)  **EUROPÄISCHE PATENTSCHRIFT**

(45) Veröffentlichungstag und Bekanntmachung des Hinweises auf die Patenterteilung:
**29.11.2006  Patentblatt 2006/48**

(21) Anmeldenummer: **01988823.9**

(22) Anmeldetag: **22.10.2001**

(51) Int Cl.:
*F03B 13/18* (2006.01)   *F03B 13/22* (2006.01)

(86) Internationale Anmeldenummer:
**PCT/EP2001/012167**

(87) Internationale Veröffentlichungsnummer:
**WO 2002/035089 (02.05.2002 Gazette 2002/18)**

(54) **ANLAGE ZUR GEWINNUNG NUTZBARER ARBEIT AUS BEWEGUNGEN VON WASSERMASSEN WIE WELLEN UND/ODER STRÖMUNGEN**

INSTALLATION FOR PRODUCING USEFUL WORK FROM MOVEMENTS OF WATER MASSES SUCH AS WAVES AND/OR CURRENTS

INSTALLATION PERMETTANT DE PRODUIRE DU TRAVAIL UTILE A PARTIR DE MOUVEMENTS DE MASSES D'EAU TELLES QUE DES VAGUES ET/OU DES COURANTS

(84) Benannte Vertragsstaaten:
**AT BE CH CY DE DK ES FI FR GB GR IE IT LI LU MC NL PT SE TR**

(30) Priorität: **23.10.2000  DE 10052536**

(43) Veröffentlichungstag der Anmeldung:
**30.07.2003  Patentblatt 2003/31**

(73) Patentinhaber: **Schmelzer, Hermann**
**57234 Wilnsdorf (DE)**

(72) Erfinder: **Schmelzer, Hermann**
**57234 Wilnsdorf (DE)**

(74) Vertreter: **Valentin, Ekkehard**
**Patentanwälte Hemmerich & Kollegen,**
**Hammerstrasse 2**
**57072 Siegen (DE)**

(56) Entgegenhaltungen:
**US-A- 1 385 738          US-A- 1 823 190**
**US-A- 4 263 516          US-A- 4 313 711**
**US-A- 4 931 662          US-A- 5 009 568**
**US-A- 5 708 305**

EP 1 330 603 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Anlage zur Gewinnung nutzbarer Arbeit aus ungeordneten Energiefluktuationen, insbesondere diffusen Bewegungen von Wassermassen wie Wellen und/oder Strömungen.

Die Erfindung dient dem Zweck, einen Beitrag zur Deckung des weltweit gewaltig gestiegenen Energiebedarfs zu leisten, und zwar unter strikter Vermeidung unerwünschter oder nachteiliger Nebenwirkungen wie Urnweltverschrnutzung z. B. durch Abfälle von Kernbrennstoffen oder anderem Brennmaterial bzw. von schädlichen Abgasen, sowie von verschwenderischem Verbrauch unwiederbringbarer Energiereserven wie Kohle oder Erdöl.

Die Weltmeere enthalten unvorstellbare Mengen an stets erneuerbarer und zumeist ungenutzter Energie, die, wenigstens zum kleinsten Teil nutzbar gemacht, den Energiehaushalt der gesamten Menschheit decken würde, so z. B. durch Gewinnung oder Erzeugung von Brauch- und/oder Trinkwasser, für den Wasserbedarf von Industrie und Landwirtschaft, beispielhaft mit Hilfe von Meerwasser-Entsatzung und Aufbereitung.

Zur Nutzbarmachung ungeordneter Energiequellen eines Meeres kommen hierbei in Betracht:

- Wellenbewegungen der Wasseroberfläche,
- Strömungen bspw. durch Mengenausgleich von Wassermassen verschiedener Meeresteile, z. B. in der Meerenge von Gibraltar oder bei der Umströmung von Erdteilen,
- Wasserspiegelschwankungen infolge von Tiden-Unterschieden.

Entsprechend den hierbei zu beobachtenden unterschiedlichen Erscheinungsformen sind auch die zu ihrer Nutzung verwendbaren Mittel sehr unterschiedlich.

Insbesondere sind zwischen Wellenbewegungen einerseits und Ausgleichsströmungen andererseits große Unterschiede bezüglich Amplitude und Frequenz zu berücksichtigen, die für die beabsichtigte Gewinnung nutzbringender Arbeit maßgebend sind.

Das Dokument U.S. 5,708,305 zeigt an horizontal schwingbaren Stangen Paddel bzw. Schwimmkörper, die nur eine begrenzte Wirksamkeit beim Einfangen von Wellenkräften aufweisen und insgesamt eine relativ instabile Bauart verwirklichen.

Das Dokument U.S. 5,009,568 offenbart eine offene, von Wellenüberlauf antreibbare Turbine mit horizontaler Rotationsachse. Der Überlauf des Antriebswassers funktioniert nur bei relativ hohem Wellengang zufriedenstellend.

Das Dokument U.S. 4,939,662 zeigt eine horizontale Balkenwippe mit am äußeren Ende angeordnetem tellerförmigen Schwimmkörper zur Induktion von Arbeitshüben für unterschiedliche Arten von Energiegewinnung.

Das Dokument U.S. 4,313,711 zeigt eine Turbine mit offener Anordnung von Rotorblättern zum Betrieb und Leistungsgewinn innerhalb einer Wasserströmung. Eine direkte Erfassung von Wellenkräften ist damit nur begrenzt möglich.

Das Dokument 4,263,516 betrifft ein in einen Fels eingelassenes Kavernen-Kraftwerk mit offener Turbine in einem Wasserablauf-Kanal. Seine Bauart erfordert das Vorhandensein einer Steilküste mit Felsformationen.

Das Dokument U.S. 1,823,190 verwendet einen Schwimmkörper an einem Hubbalken zur Umwandlung von Arbeitshüben infolge Wellenbewegungen über ein rein mechanisches Getriebe zum Rotationsantrieb eines Stromgenerators.

Und schließlich zeigt das Dokument U.S. 1,385,738 eine schräg-abwärts in die wellenbewegte See geführte Laufbahn mit am unteren Ende unter Wasser angeordnetem Pumpenzylinder und zwischen diesem und einem ortsfesten Schienengestell eine Art Zahnradbahn für ein verfahrbar antreibbares Wellenaufprallelement mit innenliegendem Motor.

Ausgehend vom vorgenannten Stand der Technik liegt der Erfindung die Aufgabe zugrunde, zur Gewinnung nutzbarer Arbeit, insbesondere aus ungeordneten Fluktuationen bzw. diffusen Bewegungen von Wassermassen ausgewählte Mittel für eine technische Realisierung einer wenigstens teilweisen Umwandlung der darin enthalten latenten Energie in nutzbare Arbeit anzugeben, die mit einer wirtschaftlichen Kosten/Nutzen- Relation verwirklichbar sind.

Die Aufgabe wird gelöst durch eine Anlage zur Gewinnung nutzbarer Arbeit aus ungeordneten Energiefluktuationen, insbesondere diffusen Bewegungen von Wassermassen in Wellen oder Strömungen, insbesondere durch ausgewählte Mittel zum Auffangen angreifender Kräfte aus Masse mal Geschwindigkeit der bewegten Wassermassen sowie durch Mittel zu deren Umwandlung in gerichtete Arbeit gemäß den kennzeichnenden Merkmalen des Anspruchs 1.

Weitere Einzelheiten, Merkmale und Vorteile der Erfindung sind aus der nachstehenden Erläuterung eines in den Zeichnungen schematisch dargestellten Ausführungsbeispiels zu entnehmen.

Es zeigen:

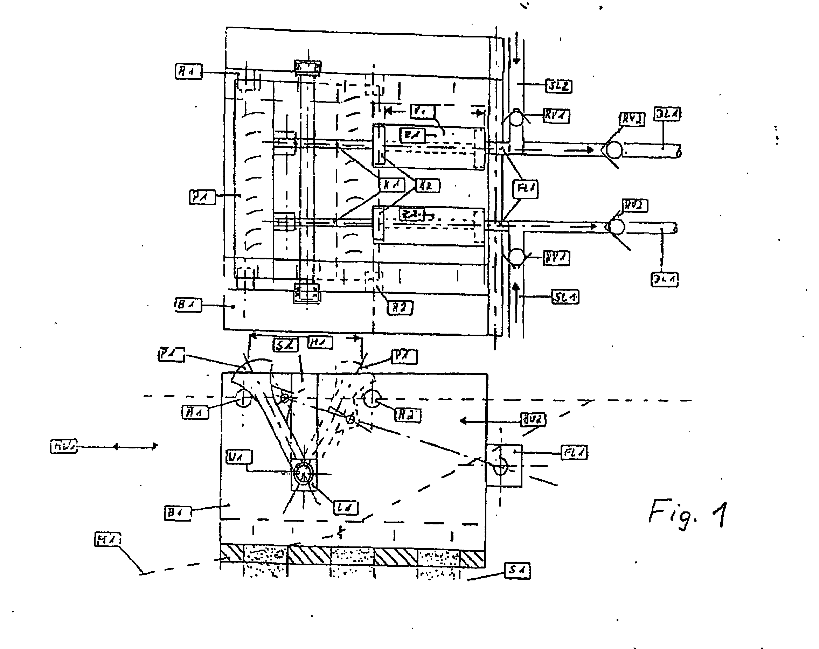

Figur 1a, 1b    die Draufsicht und die Ansicht eines im Uferwasser angeordneten Bauwerks zur Energiegewinnung aus Meerwasserbewegungen

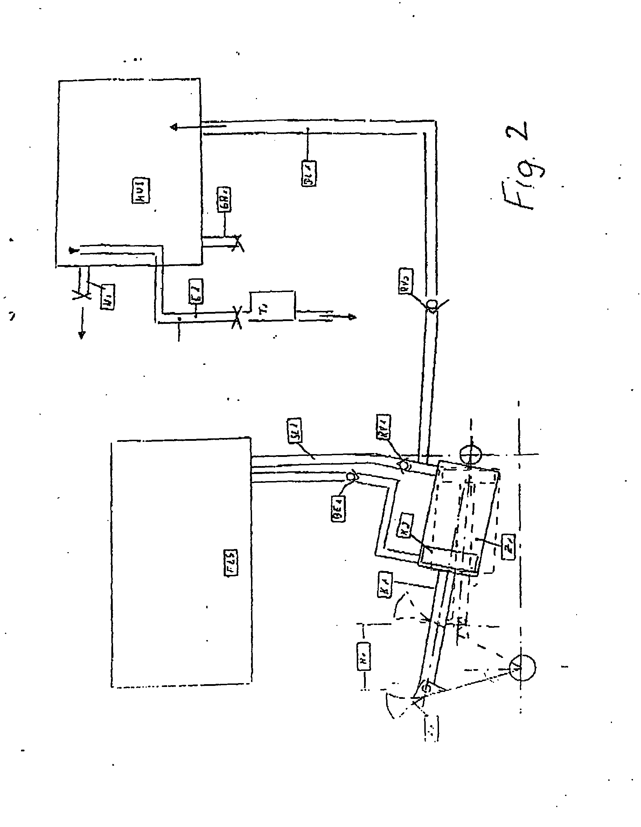

Figur 2    ein Pumpwerk mit höher gelegenem Meerwasserspeicher und Turbine zur Stromerzeugung

Figur 3      ein Pumpwerk mit höhergelegenem Meerwasserspeicher und Einrichtungen zur Meerwasserentsalzung und Trinkwassererzeugung.

Die Figuren zeigen konkrete Beispiele zur Sicherstellung der Energieversorgung, zur Produktion von Trinkwasser und insbesondere in Heißländern zur Deckung von Bewässerungskosten für die Agrarwirtschaft unter Schonung fossiler Ressourcen, um diese für sinnvollere Bedürfnisse zu nutzen.

Am Strand oder Ufer befindet sich beispielsweise ein Bauwerk "B1", das aus Fertigteilen oder Ortsbeton, oder anderem geeigneten Werkstoff erstellt ist, oder auf dem Meeresboden "M1" befestigt ist. Die Befestigung und die statische Widerstandskraft gegen die maximal zu erwartende Wellenkraft wird, realisiert durch verbohren, vergießen, spunden durch mit Säulen "S1" zu realisierenden Verbund mit Bauwerk "B1".

In das vorgeplante Bauwerk in strömungsfreundlicher Konstruktion, offen in Fließrichtung des auf- ablaufenden Wassers, wird eine bewegliche Wellenkraftübertragungsplatte "P1" eingelassen und mit einer Sicherung "S2" in Position gehalten.

Über die Anschläge "A1" und "A2", die verstellbar und gedämpft sind und den Hub = Weg zwischen "A1" und "A2" begrenzen, wird eine bestimmte Menge an Meerwasser und Kraft übertragen und begrenzt.

Das auflaufende Wasser "AW1" und das ablaufende Wasser "AW2" bewegen die Wellenkraftübertragungsplatte "P1" in ihrer Fließrichtung zwischen den Anschlägen "A1" und "A2", ständig wechselnd.

Über die Welle "W1" mit Festlager - Loslager "L1" sowie Sicherung "S2" bleibt: die Wellenkraftübertragungsplatte "P1" in Verbund mit Bauwerk "B1" in Lage und Position.

An der Wellenkraftübertragungsplatte "P1" sind mindestens ein Zylinder, oder mehr als zwei Zylinder angeschlossen, "Z1" - "Z2 ..." beweglich, die über eine Saugleitung "SL1" aus einem internen, oder externen Meerwasserreservat, geschützt vor Strandgut, gespeist werden.

Diese Zylinder "Z1" und "Z2 ..." sind über Los - Festlager "FL1" mit dem Bauwerk "B1" verbunden. Mittels Kolbenstange "K1" wird das Meerwasser durch Bewegung des Kolbens "K2" im Zylinder verdrängt in Druckleitung "DL1" durch Bewegung der Wellenkraftübertragungsplatte "P1". Dabei schließt sich das Rückschlagventil "RV1" bei auflaufendem Wasser.

Bei ablaufendem Wasser schließt sich das Rückschlagventil "RV2" durch Sog und Aufstehen der Wassersäule aus "DL1".

Das Rückschlagventil "RV1" öffnet, und füllt das Volumen des Zylinders "Z1" + "Z2 ..." mit Meerwasser auf, bringt die Wellenkraftübertragungsplatte zu Anschlag "A1". Die nächste auflaufende Welle bewegt die Wellenkraftübertragungsplatte in Richtung Land zu Anschlag "A2", verdrängt das Meerwasser über "RV2" in Leitung "DL1" und speist ein hochgelegenes Meerwasserspeicherbecken mit Meerwasser. Dabei schließt sich das Rückschlagventil "RV1".

An der Wellenkraftübertragungsplatte "P1" sind Flutventile angebracht "F1", um die Rückstellkraft zu minimieren, und die Anschläge "A1" vor Schäden zu bewahren.

Das Volumen "V1" wird bestimmt durch den Hub = Weg der Wellenkraftübertragungsplatte in Abhängigkeit des Innendurchmessers des/der Zylinder "Z1" + "Z2 ..." wobei Kolbenhub/weg = Hub - Weg der Wellenkraftübertragungsplatte "P1" ist.

Die Hubgeschwindigkeit "Ht1" ist abhängig von Witterung - Gezeiten - sowie Zeit zwischen auflaufendem und ablaufendem Wasser, in Abhängigkeit des zu beschreitenden Weges einstellbar, die gleich ist mit dem Hub "H1".

Beispiel 1:

Wird die Wellenkraftübertragungsplatte "P1" in der Minute von Anschlag "A1" bis Anschlag "A2" dreimal bewegt, so finden 3 Hübe pro Minute statt und wir erhalten eine Hubfrequenz der Wellenkraftübertragungsplatte von "Hf" = $3 \, ^{Hübe}/_{min} = ^{3}/_{60} \cdot \, ^{Hübe}/_{sec} = ^{1}/_{20} \cdot \, ^{Hub}/_{sec}$

Hat der Zylinder "Z1" ein Verdrängungsvolumen V von $200 \cdot 10^{-3} \, m^3/Hub$ so erhalten wir nach der Formel:

$$Q = Hf * V$$

eine Förderungsmenge Q von:

$$Q = \frac{1}{20} \cdot 200 \cdot 10^{-3} \, m^3/_{sec} = 0,01 \, m^3/_{sec}$$

Sind 3 Zylinder angeschlossen ergibt sich gemäß der erweiterten Formel pro Bauwerk:

$$Q = Z * Hg * V$$

$$Q = \frac{3 \cdot 3 \cdot 200 \cdot 10^{-3}}{60} \approx 0,03 \, \frac{m^3}{sec}$$

Kommen mehrere Bauwerke in Betracht, die in eine gemeinsame Druckleitung fördern, richtet sich die Durchsatzmenge nach der Formel:

$$Q = B * Z * Hg * V.$$

Unter der Annahme von drei Bauwerken ergibt sich:

$$Q = \frac{3 \cdot 3 \cdot 3 \cdot 200 \cdot 10^{-3}}{60} \approx 0,09 \, \frac{m^3}{sec}$$

$$Q = 324 \, m^3/h.$$

Dieses entspricht einer Zylinderleistung "Z1" von:

$$= 36 \, m^3/h.$$

Die Wellenkraftübertragungsplatte wird von Ihrer Fläche in Abhängigkeit der Anzahl und Kolbenfläche des, oder der Zylinder bestimmt bei minimal bis maximal auf- und ablaufendem Wasser.
Die Statik des, der Bauwerke, sowie der gesamten Bauteile wird vom maximal auf- und ablaufendem Wasser bestimmt (Wellengang - Seegang) zuzüglich einer notwendigen Sicherheit.
Das über die Zylinder "Z" verdrängte Wasser "Q" in die Druckleitungen "DL", das durch Widerstände je nach Verwendungszweck "VZ" als Wirkungsgrad dem entgegensteht, geht als Faktor mit in die Leistungsberechnung ein.
Verwendungszwecke können sein:
Filtrationen, Energiegewinnung über Wasserräder, Turbinen, Generatoren und deren Antriebe jeglicher Art, Umkehrosmose, Destillationen, Versickerungsbeete, Verdunstung, Verdampfer, Erdfilter, Entsalzungsanlagen, Beschickung von stillgelegten Bergwerken, Beschickung von hochgelegenen Auffangbecken ...

Verwendungsbeispiel 1:

Auf einem Berg in Küstennähe 250 m über NN besteht ein Meerwasserauffangbecken von einem 3600 m³ Auffangvolumen.
Dieses Becken wird über eine verlegte Druckleitung, Druckstufe PN 40 von einem Meerwasserwellen-Pumpkraftwerk gespeist mit drei Zylindern wie in Beispiel 1 angegeben:

$$Q = B * Z * Hg * V$$

$$Q = \frac{1 * 3 * 3 * 200}{60} \cdot 10^{-3} \cdot 3600 \ m^3/h = 108 \ m^3/h.$$

Daraus ergibt sich eine Befüllzeit des Beckens von 33.333 h.

Dieses Becken erhält einen Grundablass (GA1), einen Notüberlauf (N1) und eine Entnahmeleitung (E1).

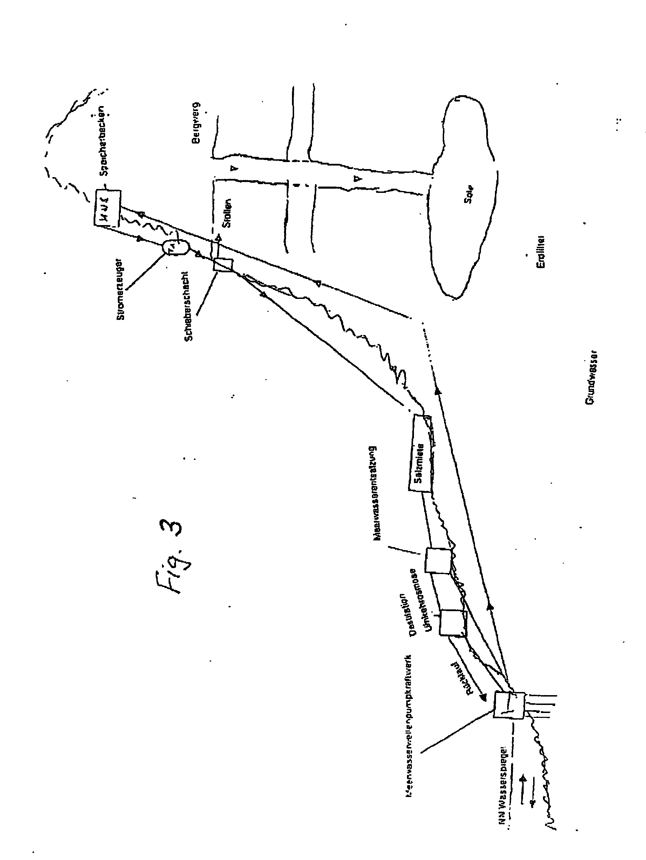

Über eine der angeschlossenen Leitungen wird eine Falleitung angebracht, an der eine Turbine (T1), oder Wasserrad angeschlossen ist, die einen Generator antreibt und Strom erzeugt. Das aus der Turbine ablaufende Wasser wird einem Schieberbauwerk, das darunter liegt zugeführt, und einem anderen Verwendungszweck zugeführt, zum Beispiel einem stillgelegten Bergwerk, was durch Erdfiltration aus dem Meerwasser Süßwasser macht, und somit den Grundwasserspiegel hebt. (Fig. 3)

Dieses hat wieder Vorteile für die Bewässerung des Bodens in der Agrarwirtschaft aber auch Nachteile durch Aufsalzung des Erdreiches und Solebildung.

Diese Sole kann dann wieder zur Salzgewinnung genutzt werden in der Ernährungswirtschaft.

Überschüssiges Meerwasser wird über den Notüberlauf (N1), gleich Rücklaufleitung, dem externen Meerwasserreservat zugeführt mit Überlauf zum Meer.

Verwendungsbeispiel 2:

Durch den Druck bzw. die Verdrängungskraft, die sich errechnet aus der Fläche der Wellenkraftübertragungsplatte "P1" und der Kolbenfläche "K2" der Zylinder "Z1" + "Z2 ...", wird die Förderhöhe bzw. der Druck an der Druckleitung "D2" bestimmt bei geschlossenem System.

Nehmen wir an, daß wie im Verwendungsbeispiel 1 eine Förderhöhe von 250 m gegeben ist, könnte eine druckabhängige Entsalzungsanlage oder Umkehrosmose betrieben werden. Bei geringerem Druckbedarf würde der Überschuß dem Meer zurückgeführt, oder einer Salzmiete, Destillation oder einer anderen Verwendung zugeführt. (Fig. 3)

Verwendungsbeispiel 3:

Durch die Verdrängung des Meerwassers aus dem Zylinder "Z" wird über eine Druckleitung eine Destillationsanlage (oder ein Verdampfer) betrieben, die sich erwärmt bzw. erhitzt durch die Temperatur über Erdwärme (Beispiel Feuerberge auf Lanzarote) oder Sonnenenergie (Brennspiegel) und damit durch Verdunstung das Salz vom Wasser getrennt wird, wobei das Wasser zur Trinkwasser oder Brauchwasserverwertung genutzt wird, das Salz zur Lebensmittelverwertung oder Streusalz oder in der Bauwirtschaft genutzt wird.

Überschüssiges Meerwasser wird wie in Beispiel 1 zur Energiegewinnung (Verstromung) verwendet, da die Prozesse unterschiedlich Zeitabhängig sind.

Die gewonnene Energie wird bei allen Prozessen zur Prozessenergie genutzt und Überschüsse in das zentrale oder dezentrale Netz eingespeist.

Die Erfindung ist geeignet, mit ökonomischen Mitteln die unerschöpfliche Quelle von Energie bzw. Arbeit ohne erkennbare Nachteile für die Umwelt anzuzapfen und löst in optimaler Weise die eingangs genannte Aufgabe.

**Bezugszeichenliste**

| | |
|---|---|
| A1= | Anschlag ablaufendes Wasser |
| A2= | Anschlag auflaufendes Wasser |
| AW1=Auflaufendes Wasser | AW2=Ablaufendes Wasser |
| B1= | Bauwerk (Ortsbeton ./. Fertigteil) |
| FL1= | Fest ./. Loslager |
| H1= | Hub-Wellenkraftübertragungsplatte=Kolbenhub |
| K1= | Kolbenstange |

| K2= | Kolben |
|---|---|
| L1= | Lager Welle Wellenkraftübertragungsplatte |
| M1= | Meeresboden - Landboden |
| P1= | Wellenkraftübertragungsplatte |
| RV1= | Rückschlagventil Saug-Befüllieitung |
| RV2= | Rückschlagventil Druckleitung |
| SL1= | Saug-Befüllleitung "Z1" |
| SL2= | Saug-Befüllleitung "Z2" |
| S1= | Säulen=Statische Verbindung mit "B1" |
| DL1= | Druckleitung |
| W1= | Wasserspiegel |
| Z1= | Zylinder 1 |
| Z2= | Zylinder 2 und mehr |
| V1= | Volumen pro Zylinder |
| P1= | Wellenkraftübertragungsplatte |
| H1= | Hub=Kolbenweg |
| K1= | Kolbenstange |
| K2= | Kolben |
| Z1= | Zylinder |
| BE1= | Be- Entlüftungsventil |
| RV1= | Rückschlagventil 1 Saugl. |
| SL1= | Saug-Befüllieitung Zylinder |
| RV2= | Rückschlagventil 2 Druckleitung |
| DL1= | Druckleitung Speiser |
| GA1= | Grundablass |
| MWS= | Meerwasserspeicher |
| E1= | Entnahmeleitung |
| T1= | Turbine - Stromerzeugung |
| N1= | Überlaufleitung |
| FLS= | Füllspeicher |

**Patentansprüche**

1. Anlage zur Gewinnung nutzbarer Arbeit aus ungeordneten Energiefluktuationen, insbesondere diffusen Bewegungen von Wassermassen in Wellen (1-5) oder Strömungen, umfassend Mittel zum Auffangen angreifender Kräfte aus Masse mal Geschwindigkeit von bewegtem Wasser, sowie Mittel zu deren Umwandlung in gerichtete Arbeit, **gekennzeichnet durch,**
   eine in zwischen Bauwerksteilen (A1, B1) angeordnete Gelenkwelle (W1) mit zur Wellenfront ausgerichteter Achse, an der mittels Holmen mindestens eine hin- und herschwingbare, im Rhythmus der Wellenbewegung antreibbare Wellenkraftübertragungsplatte (P1) befestigt ist, die über Kolbenstangen (K1) und Arbeitskolben (K2) sowie mittels Zylindern (Z1, Z2) und mit Hilfe eines Rohrleitungssystems mit den Rückschlagventilen (RV1, RV2) sowie den Saug-Befüllleitungen (SL1) für (Z1) bzw. (SL2) für (Z2) Mittel zum Einfangen angreifender Kräfte des bewegten Wassers aufweist, umfassend einen Meerwasserspeicher (MWS) mit einer zuführenden Druckleitung (DL1) sowie eine Entnahmeleitung (E1) mit einer Turbine (T1) zur Stromerzeugung und/oder einen Füllspeicher (FLS) mit Verbindungsleitungen (SL1) zu den Zylindern (Z1, Z2) mit angeordnetem Rückschlagventil (RV1) und Be- bzw. Entlüftungsventil (BE1).

2. Anlage nach Anspruch 1,
   **dadurch gekennzeichnet,**
   **dass** die Wellenkraftübertragungsplatte (P1) in einem Höhenbereich des Gewässers zwischen Wellental und Wellenberg hin- und herschwingend angeordnet ist.

3. Anlage nach Anspruch 1,
   **dadurch gekennzeichnet,**
   **dass** sie zum Betrieb von druckabhängigen Meerwasser-Entsalzungsanlagen oder Umkehrosmose verwendet wird.

**Claims**

1. An installation for producing useful work from random energy fluctuations, particularly diffuse motions of water masses in waves (1-5) or currents, comprising a means for capturing applied forces equal to mass times the speed of the moving water, as well as a means for converting said forces into directional work,
   **characterized in**
   an articulated shaft (W1) that is arranged in between structural parts (A1, B1) and the axis of which is oriented toward the wave front, wherein at least one reciprocating wave force transfer plate (P1) is fixed on said articulated shaft by means of tie bars and can be driven in the rhythm of the wave motion, and wherein said wave force transfer plate features a means for capturing applied forces of the moving water by means of piston rods (K1) and working pistons (K2) as well as by means of cylinders (Z1, Z2) and with the aid of a pipeline system with the check valves (RV1, RV2) as well as the respective suction filling lines (SL1) for (Z1) and (SL2) for (Z2), comprising a sea water reservoir (MWS) with a supplying pressure line (DL1) as well as an extraction line (E1) with a turbine (T1) for the power generation and/or a filling reservoir (FLS) with connecting lines (SL1) leading to the cylinders (Z1, Z2) and a check valve (RV1) and a ventilating or deventilating valve (BE1) arranged therein.

2. The installation according to claim 1,
   **characterized in**
   **that** the wave force transfer plate (P1) is arranged in a reciprocating fashion in a vertical region of the body of water that lies between the wave trough and the wave crest.

3. The installation according to claim 1,
   **characterized in**
   **that** it is used for operating pressure controlled sea water desalination installations or reverse osmosis.

**Revendications**

1. Installation de production de puissance utilisable à partir de fluctuations énergétiques non ordonnées, notamment de mouvements diffus de masses d'eau en vagues (1-5) ou en flux, comprenant des moyens de captation de forces intervenantes résultant de la masse et de la vitesse de l'eau déplacée ainsi que des moyens pour les convertir en puissance dirigée,
   **caractérisée par**
   un arbre articulé (W1) disposé entre des pièces de la construction (A1, B1) et dont l'axe est dirigé vers le front de vague et sur lequel est fixée, au moyen de montants, au moins une plaque de transmission de force de vague (P1) mobile en va et vient et pouvant être entraînée au rythme du mouvement de la vague, cette plaque comportant des moyens de captation des forces intervenantes de l'eau déplacée par l'intermédiaire de tiges de pistons (K1) et de pistons opérationnels (K2) ainsi qu'au moyen de cylindres (Z1, Z2) et à l'aide d'un système de canalisations équipé des soupapes anti-retour (RV1, RV2) ainsi que des conduites de remplissage par aspiration (SL1) pour (Z1) ou (SL2) pour (Z2), comprenant un accumulateur d'eau de mer (MWS) à conduite de pression d'acheminement (DL1) ainsi qu'une conduite de prélèvement (E1) équipée d'une turbine (T1) pour générer un flux et/ou un accumulateur de remplissage (FLS) équipé de conduites de liaison (SL1) avec les cylindres (Z1, Z2) où la soupape anti-retour (RV1) est disposée et une soupape de ventilation et de purge d'air (BE1).

2. Installation selon la revendication 1,
   **caractérisée en ce que**
   la plaque de transmission de force de vague (P1) est disposée de manière à osciller en va et vient dans une zone de la hauteur de l'eau entre le creux de la vague et la crête de la vague.

3. Installation selon la revendication 1,
   **caractérisée en ce que**
   elle est utilisée pour faire fonctionner des installations de dessalement dépendantes de l'eau de mer ou pour l'osmose inverse.

Fig. 1

Fig 2

Fig. 3